(19)

**Europäisches Patentamt**
**European Patent Office**
**Office européen des brevets**

(11) **EP 4 167 251 B1**

(12) **EUROPEAN PATENT SPECIFICATION**

(45) Date of publication and mention
of the grant of the patent:
**07.05.2025 Bulletin 2025/19**

(21) Application number: **21821656.2**

(22) Date of filing: **10.06.2021**

(51) International Patent Classification (IPC):
**G21C 7/10** *(2006.01)*    **G21D 3/16** *(2006.01)*
**G21C 7/08** *(2006.01)*    **G21D 3/08** *(2006.01)*

(52) Cooperative Patent Classification (CPC):
**G21C 7/10; G21D 3/16;** Y02E 30/00; Y02E 30/30

(86) International application number:
**PCT/KR2021/007290**

(87) International publication number:
**WO 2021/251773 (16.12.2021 Gazette 2021/50)**

(54) **CORE FOR LOAD-FOLLOWING OPERATION**

KERN FÜR LASTFOLGEBETRIEB

NOYAU POUR OPÉRATION DE SUIVI DE CHARGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.06.2020 KR 20200071018**

(43) Date of publication of application:
**19.04.2023 Bulletin 2023/16**

(73) Proprietor: **Korea Hydro & Nuclear Power Co., Ltd
38120 Gyeongsangbuk-do (KR)**

(72) Inventor: **AHN, Hyoyoung
Seoul 08646 (KR)**

(74) Representative: **Berggren Oy
P.O. Box 16
Eteläinen Rautatiekatu 10A
00101 Helsinki (FI)**

(56) References cited:
EP-B1- 2 026 358       JP-A- S58 105 088
KR-A- 20030 042 582    KR-A- 20040 098 821
KR-A- 20200 026 753    KR-B1- 101 668 088
US-A1- 2018 254 111

- VAN GEEMERT RENÉ ED - VAN DAM HUGO ET AL: "Use of GPT for stabilization and acceleration of search mechanisms in industrial core computations", ANNALS OF NUCLEAR ENERGY, PERGAMON PRESS, OXFORD, GB, vol. 136, 19 September 2019 (2019-09-19), XP085885698, ISSN: 0306-4549, [retrieved on 20190919], DOI: 10.1016/J.ANUCENE.2019.107013
- YOUSEFPOUR ET AL: "Improvement of the axial power distribution control capabilities in VVER-1000 reactors", ANNALS OF NUCLEAR ENERGY, PERGAMON PRESS, OXFORD, GB, vol. 27, no. 10, 1 July 2000 (2000-07-01), pages 949 - 957, XP005311303, ISSN: 0306-4549, DOI: 10.1016/S0306-4549(99)00098-5

## Description

[Technical Field]

The present disclosure relates to a reactor core for load following operation.

[Background Art]

In general, nuclear power plants were responsible for a base load.

However, according to European Utility Requirements (EUR), nuclear power plants should have a daily load-following capability that may vary output between 50% and 100%.

A reactor core for load following operation of the conventional nuclear power plant performed a load following operation by raising and lowering control rods for a load following operation in an axial direction of the reactor core in response to set power (e.g., 50% to 100%).

However, in the conventional reactor core for load following operation, according to the raising and lowering of the control rods for the load following operation during the load following operation, a difference between a top output and a bottom output of the reactor core increases, so there is a problem in that a fluctuation in a power axial offset increases.

Document "Use of GPT for stabilization and acceleration of search mechanisms in industrial core computations" (ANNALS OF NUCLEAR ENERGY, PERGAMON PRESS, OXFORD, GB, vol. 136, 19 September 2019 (2019-09-19), XP085885698, ISSN: 0306-4549, DOI: 10.1016/ J.ANUCENE.2019.107013. Van Geemert Rene et al.) discusses the merits of Generalized Perturbation Theory (GPT) in the computational nuclear science and engineering context.

Document KR 101668088 B1 discloses a control rod and a control rod assembly of a nuclear reactor.

Document JPS58105088A discloses a control rod for a boiling water reactor, and more particularly a control rod capable of optimally controlling a power distribution of a reactor by specifying a distribution of a neutron absorber.

Document "Improvement of the axial power distribution control capabilities in VVER-1000 reactors", (ANNALS OF NUCLEAR ENERGY, PERGAMON PRESS, OXFORD, GB, vol. 27, no. 10, 1 July 2000 (2000-07-01), pages 949-957, XP005311303, ISSN: 0306-4549, DOI: 10.1016/S0306-4549(99)00098-5. Yousefpour et al.) describes an automatic reactor power control system for VVER-1000 reactor and reports simulation analysis results for a typical daily load follow operation.

[Disclosure]

[Technical Problem]

The present invention has been made in an effort to provide a reactor core for load following operation having advantages of minimizing fluctuations in power axial offset and xenon axial offset during a load following operation of a nuclear power plant.

[Technical Solution]

An exemplary embodiment of the present invention provides a reactor core for load following operation including: a reactor core body; a plurality of load-following control rods that are configured to be inserted into the reactor core body in an axial direction in response to an output set for the load following operation, overlap each other in the axial direction, and are configured to be simultaneously raised and lowered; and a first power axial offset control rod that is spaced apart from the plurality of load-following control rods in a plane, has an end portion positioned below a center of the reactor core body in the axial direction, and is configured to be raised and lowered only below the center of the reactor core body in a direction to compensate for a fluctuation in a power axial offset due to the insertion of the plurality of load-following control rods.

The first power axial offset control rod may include: a top absorbing material having a first diameter; a bottom absorbing material that is positioned below the top absorbing material and has a second diameter larger than the first diameter; and a cladding material that encloses the top absorbing material and the bottom absorbing material, and a top thickness of the cladding material enclosing the top absorbing material is thicker than a bottom thickness of the cladding material enclosing the bottom absorbing material.

The top absorbing material and the bottom absorbing material may contain an Ag-In-Cd alloy.

The plurality of load-following control rods may include a first load-following control rod, a second load-following control rod, and a third load-following control rod sequentially overlapped by 30% to 70% in the axial direction.

The first load-following control rod and the second load-following control rod may have the same structure as the first power axial offset control rod, and the third load-following control rod may have a structure different from that of the first power axial offset control rod.

The reactor core may further include: a second power axial offset control rod that is spaced apart from the first power axial offset control rod, has an end portion positioned on a top of the reactor core body in the axial direction, and is configured to be raised and lowered only on the top of the reactor core body in a direction to assist the first power axial offset control rod.

The second power axial offset control rod may have a structure different from that of the first power axial offset control rod.

The reactor core may further include: a plurality of shutdown control rods that are spaced apart from the plurality of load-following control rods in a plane, and inserted into the reactor core body for shutdown of a reactor.

In the reactor core body, the power axial offset may have a negative value for an entire period, and the reactor core body may include a plurality of fuels including at least one of MOX and $UO_2$.

## [Advantageous Effects]

According to an embodiment of the present invention, there is provided a reactor core for load following operation capable of minimizing fluctuations in power axial offset and xenon axial offset during a load following operation of a nuclear power plant. That is, according to a reactor core for load following operation according to an embodiment, it is possible to secure a sufficient thermal margin during a load following operation, thereby providing a much greater operating margin than before.

## [Description of the Drawings]

FIG. 1 is a layout diagram of a reactor core for load following operation according to an embodiment.

FIG. 2 is a graph showing characteristics of a reactor core body illustrated in FIG. 1.

FIG. 3 is a table showing characteristics of control rods illustrated in FIG. 1.

FIG. 4 is a longitudinal cross-sectional view illustrating a first power axial offset control rod illustrated in FIG. 1.

FIG. 5 is a diagram illustrating movement of the control rods illustrated in FIG. 1.

FIG. 6 is a graph showing control rods critical heights of the control rods during a load following operation at an end of cycle (EOC) of the reactor core for load following operation according to an embodiment.

FIG. 7 is a graph showing a power axial offset during the load following operation at a beginning of cycle (BOC), a middle of cycle (MOC), and the end of cycle (EOC) of the reactor core for load following operation according to an embodiment.

FIG. 8 is an enlarged graph of a portion of the graph shown in FIG. 7.

FIG. 9 is a graph showing a xenon axial offset during the load following operation of the reactor core for load following operation according to an embodiment.

## [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the scope of the present invention.

In addition, unless explicitly described to the contrary, the word "comprise", and variations such as "comprises" or "comprising", will be understood to imply the inclusion of stated elements but not the exclusion of any other elements.

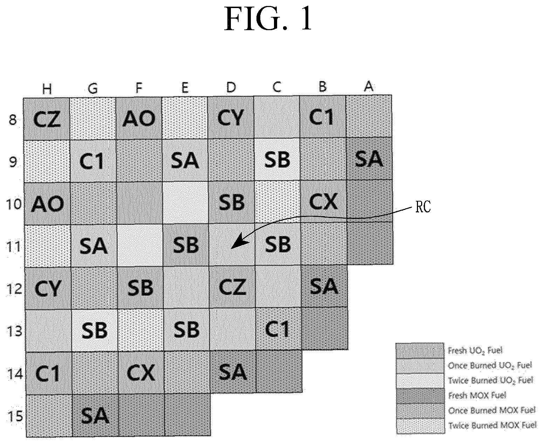

Hereinafter, a reactor core for load following operation according to an embodiment will be described with reference to FIGS. 1 to 9. Hereinafter, the reactor core for load following operation may be a reactor core included in a pressurized water reactor (PWR), but is not limited thereto.

FIG. 1 is a layout diagram of a reactor core for load following operation according to an embodiment. FIG. 1 is a layout diagram illustrating a part of the entire reactor core.

Referring to FIG. 1, a reactor core for load following operation according to an embodiment includes a reactor core body RC, a plurality of load-following control rods CY, CX, and C1, a first power axial offset control rod CZ, a second power axial offset control rod AO, and a plurality of shutdown control rods SB and SA.

The reactor core body RC includes a plurality of fuel assemblies including at least one of MOX and $UO_2$.

The plurality of fuel assemblies includes a total of 193 assemblies, and one fuel assembly includes nuclear fuel rods in a 17*17 Westinghouse type arrangement. An effective reactor core length of the reactor core body RC may be 426.7 cm or 46 cm longer than the APR1400, but is not limited thereto.

The fuel assemblies included in the reactor core body RC include fresh $UO_2$ fuel, once burned $UO_2$ fuel, twice burned $UO_2$ fuel, fresh MOX fuel, once burned MOX fuel, and twice burned MOX fuel. The arrangement of the fuel assemblies may be configured as illustrated in FIG. 1, but is not limited thereto. The reactor core body RC may be operated for 18 months, but is not limited thereto.

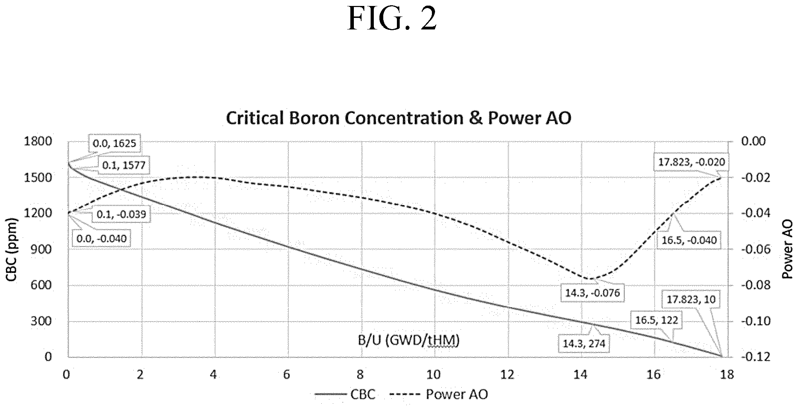

FIG. 2 is a graph showing characteristics of a reactor core body illustrated in FIG. 1. In FIG. 2, the X axis represents burnup (B/U), the left Y axis represents critical boron concentration (CBC), and the right Y axis represents the power axial offset (power AO).

Referring to FIG. 2, the reactor core body may represent a beginning of cycle (BOC), a middle of cycle (MOC), and an end of the cycle (EOC), respectively, at each burnup of 0.1GWD/tHM, 14.3GWD/tHM, and 16.5GWD/tHM. The critical boron concentration (CBC) and the power axial offset (power AO) in each cycle are as illustrated in FIG. 2.

In the reactor core body, the power axial offset (power AO) may have a negative value during the entire period, but is not limited thereto.

Here, the power axial offset (PAO) satisfies the following Equation.

[Equation]

$$PAO = (P_{top} - P_{bottom}) / (P_{top} + P_{bottom})$$

Here, $P_{top}$ means a top output of the reactor core, and $P_{bottom}$ means a bottom output of the reactor core.

As such, when the power axial offset (Power AO) of the reactor core body has a negative value, it means that the bottom output of the reactor core body is higher than the top output.

Referring back to FIG. 1, the plurality of load-following control rods CY, CX, and C1, the first power axial offset control rod CZ, the second power axial offset control rod AO, the plurality of shutdown control rods SB and SA are arranged on a top of the reactor core body RC, and are optionally inserted into the reactor core body RC in the axial direction for load following operation control, power axial offset control, or reactor shutdown of the reactor core body RC. Control rods including the plurality of load-following control rods CY, CX, and C1, the first power axial offset control rod CZ, the second power axial offset control rod AO, and the plurality of shutdown control rods SB and SA include a total of 85 control rods, and 65 control rods of the control rods are positioned on $UO_2$ fuel assemblies, and 20 control rods are positioned on MOX fuel assemblies.

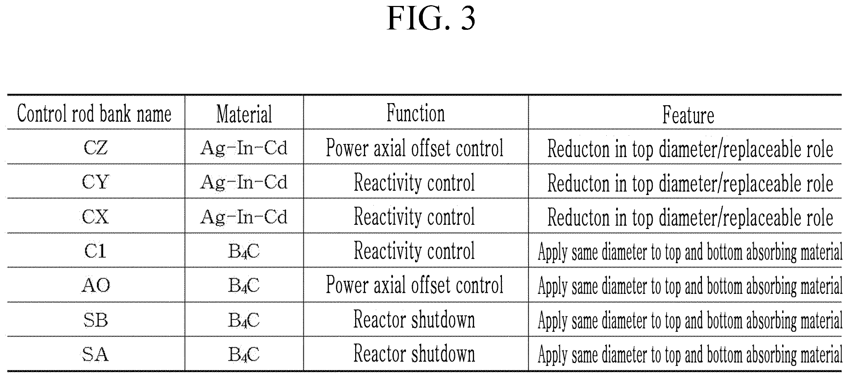

FIG. 3 is a table showing characteristics of control rods illustrated in FIG. 1.

Referring to FIGS. 1 and 3, the plurality of load-following control rods CY, CX, and C1 are inserted into the reactor core body RC in the axial direction for reactivity control corresponding to the output set for the load following operation, and are simultaneously raised and lowered to the reactor core body RC by overlapping each other in the axial direction. The plurality of load-following control rods CY, CX, and C1 includes a first load-following control rod CY, a second load-following control rod CX, and a third load-following control rod C1.

The first load-following control rod CY and the second load-following control rod CX have the same structure as the first power axial offset control rod CZ to be described later.

The third load-following control rod C1 has a structure different from that of the first power axial offset control rod CZ. The third load-following control rod C1 includes an absorbing material containing $B_4C$, and a top absorbing material and a bottom absorbing material have the same diameter.

The first power axial offset control rod CZ is spaced apart from the plurality of load-following control rods CY, CX, and C1 in a plane for the power axial offset control during the load following operation, has an end portion inserted below the center of the reactor core body RC in the axial direction, and is lowered and raised only below the center of the reactor core body RC in the direction (i.e., direction in which the first power axial offset control rod CZ is raised when the top is over-output and is lowered when the bottom is over-output) to compensate for the fluctuation in the power axial offset due to the insertion of the plurality of load-following control rods CY, CX, and C1.

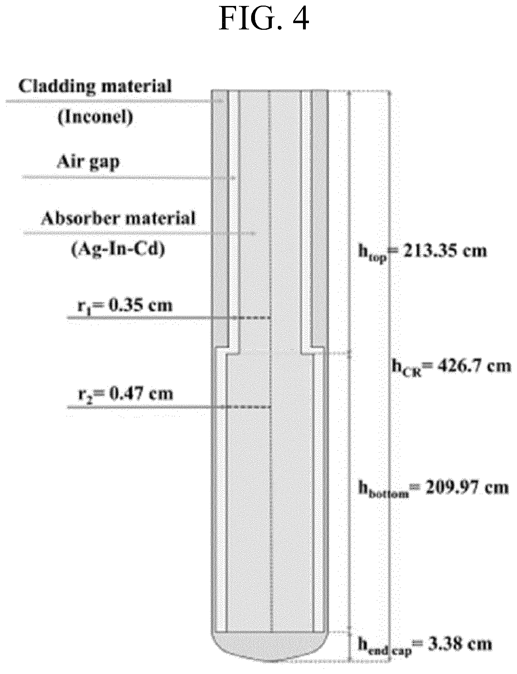

FIG. 4 is a longitudinal cross-sectional view illustrating the first power axial offset control rod illustrated in FIG. 1.

Referring to FIGS. 4, 1, and 3, the first power axial offset control rod CZ includes an absorbing material containing a silver-indium-cadmium (Ag-In-Cd) alloy. **The** first power axial offset control rod CZ includes a top absorbing material having a first diameter $r_1$, a bottom absorbing material that is positioned below the top absorbing material and has a second diameter $r_2$ larger than the first diameter $r_1$, and a cladding material enclosing the top absorbing material and the bottom absorbing material. A top thickness of the cladding material enclosing the top absorbing material is thicker than a bottom thickness of the cladding material enclosing the bottom absorbing material. An air gap is positioned between the cladding material and the absorbing material.

Since the second diameter $r_2$ of the bottom absorbing material of the first power axial offset control rod CZ is larger than the first diameter $r_1$ of the top absorbing material, the effect of suppressing the bottom output compared to the top output of the reactor core body RC is improved.

Since the top thickness of the cladding material enclosing the top absorbing material is thicker than the bottom thickness of the cladding material enclosing the bottom absorbing material, a top weight and a bottom weight of the first power axial offset control rod CZ are substantially the same, so the first power axial offset control rod CZ may fall to the reactor core body RC within 4 seconds by its own weight.

The first power axial offset control rod CZ has the same structure as the first load-following control rod CY and the second load-following control rod CX.

Since the first power axial offset control rod CZ has the same structure as the first load-following control rod CY and the second load-following control rod CX, the first power axial offset control rod CZ, the first load-following control rod CY, and the second load-following control rod CX exchange roles with each other to reduce the effect that only the surrounding fuel burns less compared to other fuels according to the insertion of the power axial offset control rod during the load following operation.

Referring back to FIGS. 1 and 3, the second power axial offset control rod AO has a structure different from that of the first power axial offset control rod CZ. The second power axial offset control rod AO includes the absorbing material containing $B_4C$, and the top absorbing material and the bottom absorbing material have the same diameter. The second power axial offset control rod AO is spaced apart from the first power axial offset control rod CZ in a plane for the power axial offset control during the load following operation and has an end portion positioned on the top of the reactor core body RC in the axial direction. The second power axial offset control rod AO is raised and lowered only on the top of the reactor core body RC in a direction to assist the first power axial offset control rod CZ.

The plurality of shutdown control rods SB and SA are spaced apart from the plurality of load-following control rods CY, CX, and C1, and are inserted into the reactor core body RC to shutdown the reactor. The plurality of shutdown control rods SB and SA include the absorbing material containing $B_4C$, and the top absorbing material and the bottom absorbing material have the same diameter.

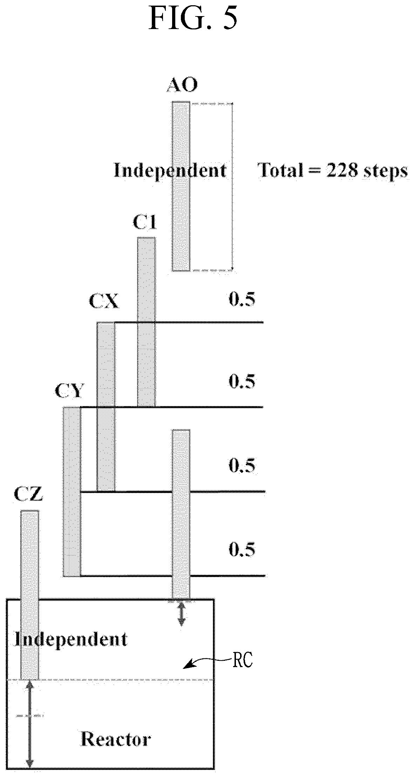

FIG. 5 is a diagram illustrating movement of the control rods illustrated in FIG. 1.

Referring to FIG. 5, during the load following operation of the reactor core body RC, the plurality of load-following control rods CY, CX, and C1 are inserted into the reactor core body RC in the axial direction for the reactivity control corresponding to the output set for the load following operation. The first load-following control rod CY, the second load-following control rod CX, and the third load-following control rod C1 included in the plurality of load-following control rods CY, CX, and C1 are sequentially overlapped by 50% (0.5) in the axial direction. The first load-following control rod CY, the second load-following control rod CX, and the third load-following control rod C1 is raised and lowered while being automatically inserted into the reactor core body RC in response to the set output.

In another embodiment, the first load-following control rod CY, the second load-following control rod CX, and the third load-following control rod C1 may be sequentially overlapped in the axial direction by 30% to 70%.

The first power axial offset control rod CZ has an end portion positioned below the center of the reactor core body RC in the axial direction for the power axial offset control during the load following operation, and is lowered and raised only below the center of the reactor core body RC in the direction to compensate for the fluctuation in the power axial offset due to the insertion of the plurality of load-following control rods CY, CX, and C1.

The second power axial offset control rod AO has an end portion positioned on the top of the reactor core body RC in the axial direction for the power axial offset control during the load following operation, and is raised and lowered only on the top of the reactor core body RC to assist the first power axial offset control rod CZ.

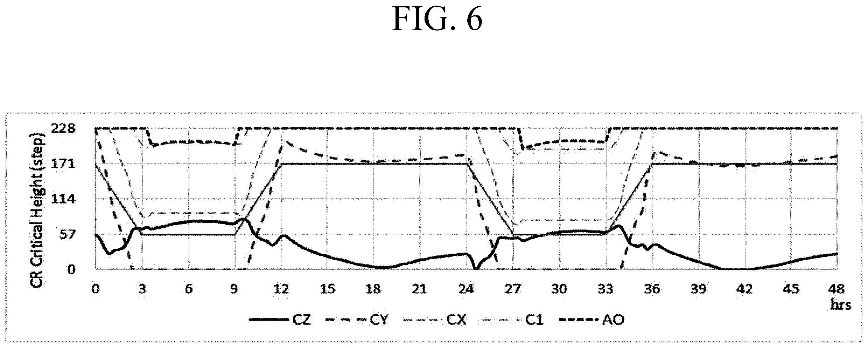

FIG. 6 is a graph showing control rods critical heights of the control rods during a load following operation at an end of cycle (EOC) of a reactor core for load following operation according to an embodiment. In FIG. 6, an X axis represents time, and a Y axis represents the heights of the end portions of the control rods in the reactor core.

Referring to FIG. 6, the set output (solid gray line) of the load following operation scenario of the reactor core for load following operation decreases from 100% to 50% over 3 hours at the end of cycle (EOC) of the reactor core body and lasts for 6 hours, and then again increases from 50% to 100% over 3 hours, in which one set lasting for 12 hours is set as two consecutive sets.

The first load-following control rod CY, the second load-following control rod CX, and the third load-following control rod C1 are inserted into the reactor core body while being sequentially overlapped by 50% in the axial direction in response to the output (solid gray line) set for the load following operation, and thus, a total of 228 steps of the reactor core body are raised and lowered.

The first power axial offset control rod CZ has an end portion positioned below the center of the reactor core body in the axial direction during the load following operation, and is lowered and raised only below the center (114 steps) of the reactor core body in the direction (i.e., direction in which the first power axial offset control rod CZ is raised when the top is over-output and is lowered when the bottom is over-output) to compensate for the fluctuation in the power axial offset due to the insertion of the first load-following control rod CY, the second load-following control rod CX, and the third load-following control rod C1. The first power axial offset control rod CZ is raised and lowered only below the center of the reactor core body in response to the fluctuation in the power axial offset fluctuation while being inserted into the reactor core body by 65% to 75% in the axial direction during the load following operation.

The second power axial offset control rod AO has the end portion positioned on the top of the reactor core body in the axial direction during the load following operation, and is raised and lowered only the top (top of 171 steps) of the reactor core body in the direction to assist the first power axial offset control rod CZ.

For example, before starting the load following operation, the first power axial offset control rod CZ is inserted up to 57 steps out of the total of 228 steps. **In** this case, boric acid dilution may be performed to compensate for the reactivity. Since the output is biased toward the bottom due to the insertion of the first load-following control rod CY, to prevent this, the first power axial offset control rod CZ is lowered and then the trend of the output distribution starts to reverse, so the first power axial offset control rod CZ is raised. When the output reaches 50% which is the target level, the second power axial offset control rod AO is partially inserted, and the second load-following control rod CX and the third load-following control rod C1 are slightly drawn out. For this reason, compared to the case where the second load-following control rod CX and the third load-following control rod C1 overlap and move, the compensation for the reactivity varying due to the xenon fluctuation may be finely controlled by moving the second power axial offset control rod AO. **In** the 50% region of the output, the power axial offset of the reactor core body is controlled by raising and lowering the first power axial offset control rod CZ, and the varying reactivity is compensated by raising and lowering the second power axial offset control rod AO. Before increasing the output to 100% again, the second power axial offset control rod AO is completely drawn out from the reactor core body, and the second load-following control rod CX and the third load-following control rod C1 are slightly inserted. After recovering 100% output, the power axial offset is adjusted using the first power axial offset control rod CZ.

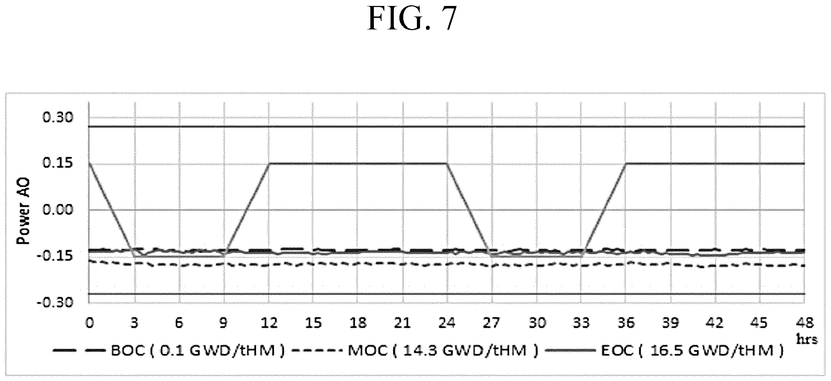

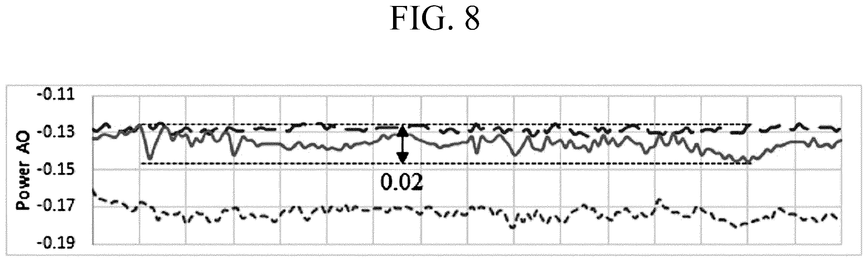

FIG. 7 is a graph showing the power axial offset during the load following operation at the beginning of cycle (BOC), the middle of cycle (MOC), and the end of cycle (EOC) of the reactor core for load following operation according to an embodiment. In FIG. 7, an X axis represents time, and a Y axis represents a power axial offset (power AO). FIG. 8 is an enlarged graph of a portion of the graph shown in FIG. 7. FIG. 7 may be a graph derived using CASMO-4 and SIMULATE-3 codes, but is not limited thereto.

Referring to FIGS. 7 and 8, it can be seen that, at the end of cycle (EOC) of the reactor core for load following operation according to an embodiment, the fluctuation in the power axial offset (Power AO) during the load following operation corresponding to the output set for the load following operation (solid gray line) is 0.02 at most.

That is, it was confirmed that the fluctuation in the power axial offset (power AO) during the load following operation of the reactor core for load following operation according to an embodiment is minimized.

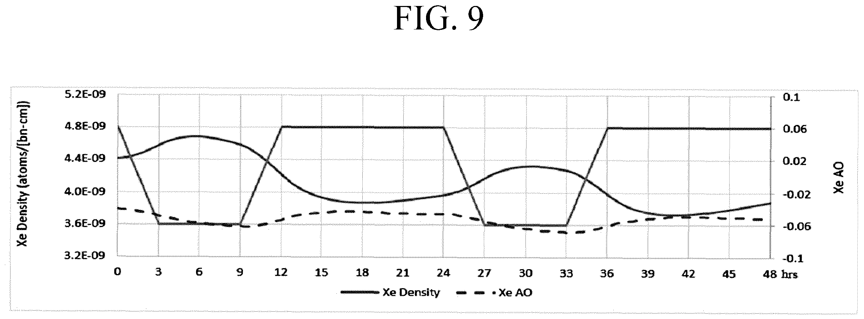

FIG. 9 is a graph illustrating the xenon axial offset during the load following operation of the reactor core for load following operation according to an embodiment. In FIG. 9, the X axis represents time, the left Y axis represents xenon density (Xe density), and the right Y axis represents a xenon axial offset (Xe AO).

Referring to FIG. 9, it can be seen that the fluctuation in the total Xe density during the load following operation corresponding to the output (solid gray line) set for the load following operation of the reactor core for load following operation according to an embodiment cannot be controlled, but the fluctuation in the xenon axial offset (Xe AO) decreases.

That is, it was confirmed that the fluctuation in the xenon axial offset (Xe AO) during the load following operation of the reactor core for load following operation according to an embodiment is minimized.

As described above, there is provided a reactor core for load following operation capable of minimizing fluctuations in power axial offset and xenon axial offset during a load following operation of a nuclear power plant.

Although the exemplary embodiment of the present invention has been described in detail hereinabove, the scope of the present invention is not limited thereto. That is, several modifications and alterations made by a person of ordinary skill in the art using a basic concept of the present invention as defined in the claims fall within the scope of the present invention.

[Description of Reference Signs]

RC: Reactor core body, CY, CX, C1: Load-following control rod, CZ: First power axial offset control rod, AO: Second power axial offset control rod

**Claims**

1. A reactor core for load following operation, comprising:

   a reactor core body (RC);
   a plurality of load-following control rods (CY, CX, C1) that are configured to be inserted into the reactor core body (RC) in an axial direction in response to an output set for the load following operation, overlap each other in the axial direction, and are configured to be simultaneously raised and lowered **characterized in that** the reactor core further comprises
   a first power axial offset control rod (CZ) that is spaced apart from the plurality of load-following control rods (CY, CX, C1) in a plane, has an end portion positioned below a center of the reactor core body (RC) in the axial direction, and is configured to be raised and lowered only below the center of the reactor core body (RC) in a direction to compensate for a fluctuation in a power axial offset due to the insertion of the plurality of load-following control rods (CY, CX, C1).

2. The reactor core of claim 1, wherein:
   the first power axial offset control rod (CZ) includes:

   a top absorbing material having a first diameter;
   a bottom absorbing material that is positioned below the top absorbing material and has a second diameter larger than the first diameter; and
   a cladding material that encloses the top absorbing material and the bottom absorbing material, and
   a top thickness of the cladding material enclosing the top absorbing material is thicker than a bottom thickness of the cladding material enclosing the bottom absorbing material.

3. The reactor core of claim 2, wherein:
   the top absorbing material and the bottom absorbing material contain an Ag-In-Cd alloy.

4. The reactor core of claim 2, wherein:

the plurality of load-following control rods (CY, CX, C1) includes a first load-following control rod (CY), a second load-following control rod (CX), and a third load-following control rod (C1) sequentially overlapped by 30% to 70% in the axial direction.

5. The reactor core of claim 4, wherein:

   the first load-following control rod (CY) and the second load-following control rod (CX) have the same structure as the first power axial offset control rod (CZ), and
   the third load-following control rod (C1) has a structure different from that of the first power axial offset control rod (CZ).

6. The reactor core of claim 1, further comprising: a second power axial offset control rod (AO) that is spaced apart from the first power axial offset control rod (CZ), has an end portion positioned a top of the reactor core body (RC) in the axial direction, and is configured to be raised and lowered only on the top of the reactor core body (RC) in a direction to assist the first power axial offset control rod (CZ).

7. The reactor core of claim 6, wherein: the second power axial offset control rod (AO) has a structure different from that of the first power axial offset control rod (CZ).

8. The reactor core of claim 1, further comprising: a plurality of shutdown control rods (SB, SA) that are spaced apart from the plurality of load-following control rods (CY, CX, C1) in a plane, and inserted into the reactor core body (RC) for shutdown of a reactor.

9. The reactor core of claim 1, wherein:

   in the reactor core body (RC), the power axial offset has a negative value for an entire period, and
   the reactor core body (RC) includes a plurality of fuels including at least one of MOX and $UO_2$.

**Patentansprüche**

1. Reaktorkern für den Lastfolgebetrieb, umfassend:

   einen Reaktorkernkörper (RC);
   eine Vielzahl lastfolgender Steuerstäbe (CY, CX, C1), die so konfiguriert sind, dass sie in Reaktion auf eine für den Lastfolgebetrieb eingestellte Leistung axial in den Reaktorkernkörper (RC) eingeführt werden, sich axial überlappen und so konfiguriert sind, dass sie gleichzeitig angehoben und abgesenkt werden können, **dadurch gekennzeichnet, dass** der Reaktorkern ferner Folgendes umfasst
einen ersten Leistungs-Axialversatz-Steuerstab (CZ), der in einer Ebene von der Vielzahl lastfolgender Steuerstäbe (CY, CX, C1) beabstandet ist, einen Endabschnitt aufweist, der in axialer Richtung unterhalb der Mitte des Reaktorkerns (RC) positioniert ist, und so konfiguriert ist, dass er nur unterhalb der Mitte des Reaktorkerns (RC) angehoben und abgesenkt werden kann, um Schwankungen des Leistungs-Axialversatzes aufgrund des Einsetzens der Vielzahl lastfolgender Steuerstäbe (CY, CX, C1) auszugleichen.

2. Reaktorkern nach Anspruch 1, wobei:
   der erste axial versetzte Leistungssteuerstab (CZ) Folgendes umfasst:

   ein oberes Absorptionsmaterial mit einem ersten Durchmesser;
   ein unteres Absorptionsmaterial, das unterhalb des oberen Absorptionsmaterials angeordnet ist und einen zweiten Durchmesser aufweist, der größer ist als der erste Durchmesser; und
   ein Hüllmaterial, das das obere Absorptionsmaterial und das untere Absorptionsmaterial umschließt, und
   die obere Dicke des Hüllmaterials, das das obere Absorptionsmaterial umschließt, größer ist als die untere Dicke des Hüllmaterials, das das untere Absorptionsmaterial umschließt.

3. Reaktorkern nach Anspruch 2, wobei:
   das obere und das untere Absorptionsmaterial eine Ag-In-Cd-Legierung enthalten.

4. Reaktorkern nach Anspruch 2, wobei:
   die Vielzahl der lastfolgenden Steuerstäbe (CY, CX, C1) einen ersten lastfolgenden Steuerstab (CY), einen zweiten lastfolgenden Steuerstab (CX) und einen dritten lastfolgenden Steuerstab (C1) umfasst, die sich in axialer Richtung um 30 % bis 70 % überlappen.

5. Reaktorkern nach Anspruch 4, wobei:

   der erste lastfolgende Steuerstab (CY) und der zweite lastfolgende Steuerstab (CX) den gleichen Aufbau wie der erste Leistungs-Axialversatz-Steuerstab (CZ) aufweisen, und
   der dritte lastfolgende Steuerstab (C1) einen anderen Aufbau als der erste Leistungs-Axialversatz-Steuerstab (CZ) aufweist.

6. Reaktorkern nach Anspruch 1, ferner umfassend:
   einen zweiten Leistungs-Axialversatz-Steuerstab (AO), der vom ersten Leistungs-Axialversatz-Steuerstab (CZ) beabstandet ist, dessen Endabschnitt in axialer Richtung oben am Reaktorkernkörper (RC) positioniert ist und der so konfiguriert ist, dass er nur oben am Reaktorkernkörper (RC) in einer Richtung angehoben und abgesenkt werden kann, die den ersten Leistungs-Axialversatz-Steuerstab (CZ) unterstützt.

7. Reaktorkern nach Anspruch 6, wobei:
der zweite Leistungs-Axialversatz-Steuerstab (AO) eine andere Struktur aufweist als der erste Leistungs-Axialversatz-Steuerstab (CZ).

8. Reaktorkern nach Anspruch 1, ferner umfassend:
eine Vielzahl von Abschaltsteuerstäben (SB, SA), die in einer Ebene von den lastfolgenden Steuerstäben (CY, CX, C1) beabstandet sind und zur Abschaltung eines Reaktors in den Reaktorkernkörper (RC) eingesetzt werden.

9. Reaktorkern nach Anspruch 1, wobei:

im Reaktorkernkörper (RC) der axiale Leistungsversatz über eine gesamte Periode hinweg einen negativen Wert aufweist, und der Reaktorkernkörper (RC) eine Vielzahl von Brennstoffen enthält, darunter mindestens eines von MOX und $UO_2$.

## Revendications

1. Noyau de réacteur pour opération avec suivi de charge, comprenant :

un corps de noyau de réacteur (RC) ;
une pluralité de tiges de commande de suivi de charge (CY, CX, C1) qui sont configurées pour être insérées dans le corps de noyau de réacteur (RC) dans une direction axiale en réponse à un ensemble de sortie pour l'opération de suivi de charge, se chevauchent dans la direction axiale, et sont configurées pour être simultanément levées et abaissées, **caractérisé en ce que** le noyau de réacteur comprend en outre une première tige de commande de décalage axial de puissance (CZ) qui est espacée de la pluralité de tiges de commande de suivi de charge (CY, CX, C1) dans un plan, a une partie d'extrémité positionnée sous un centre du corps de noyau de réacteur (RC) dans la direction axiale, et est configurée pour être levée et abaissée uniquement sous le centre du corps de noyau de réacteur (RC) dans une direction pour compenser une fluctuation d'un décalage axial de puissance en raison de l'insertion de la pluralité de tiges de commande de suivi de charge (CY, CX, C1).

2. Noyau de réacteur selon la revendication 1, dans lequel :
la première tige de commande de décalage axial de puissance (CZ) comporte :

un matériau absorbant supérieur ayant un premier diamètre ;
un matériau absorbant inférieur qui est positionné sous le matériau absorbant supérieur et a un second diamètre plus grand que le premier diamètre ; et
un matériau de revêtement qui entoure le matériau absorbant supérieur et le matériau absorbant inférieur, et
une épaisseur supérieure du matériau de revêtement entourant le matériau absorbant supérieur est plus épaisse qu'une épaisseur inférieure du matériau de revêtement entourant le matériau absorbant inférieur.

3. Noyau de réacteur selon la revendication 2, dans lequel :
le matériau absorbant supérieur et le matériau absorbant inférieur contiennent un alliage Ag-In-Cd.

4. Noyau de réacteur selon la revendication 2, dans lequel :
la pluralité de tiges de commande de suivi de charge (CY, CX, C1) comporte une première tige de commande de suivi de charge (CY), une deuxième tige de commande de suivi de charge (CX) et une troisième tige de commande de suivi de charge (C1) se chevauchant séquentiellement de 30 % à 70 % dans la direction axiale.

5. Noyau de réacteur selon la revendication 4, dans lequel :

la première tige de commande de suivi de charge (CY) et la deuxième tige de commande de suivi de charge (CX) ont la même structure que la première tige de commande de décalage axial de puissance (CZ), et
la troisième tige de commande de suivi de charge (C1) a une structure différente de celle de la première tige de commande de décalage axial de puissance (CZ).

6. Noyau de réacteur selon la revendication 1, comprenant en outre :
une seconde tige de commande de décalage axial de puissance (AO) qui est espacée de la première tige de commande de décalage axial de puissance (CZ), a une partie d'extrémité positionnée au sommet du corps de noyau de réacteur (RC) dans la direction axiale, et est configurée pour être levée et abaissée uniquement au sommet du corps de noyau de réacteur (RC) dans une direction pour aider la première tige de commande de décalage axial de puissance (CZ).

7.  Noyau de réacteur selon la revendication 6, dans lequel :
    la seconde tige de commande de décalage axial de puissance (AO) a une structure différente de celle de la première tige de commande de décalage axial de puissance (CZ).

8.  Noyau de réacteur selon la revendication 1, comprenant en outre :
    une pluralité de tiges de commande d'arrêt (SB, SA) qui sont espacées de la pluralité de tiges de commande de suivi de charge (CY, CX, C1) dans un plan, et insérées dans le corps de noyau de réacteur (RC) pour l'arrêt d'un réacteur.

9.  Noyau de réacteur selon la revendication 1, dans lequel :

    dans le corps de noyau de réacteur (RC), le décalage axial de puissance a une valeur négative pendant une période entière, et
    le corps de noyau de réacteur (RC) comporte une pluralité de combustibles comportant au moins l'un parmi MOX et $UO_2$.

# FIG. 1

# FIG. 2

Critical Boron Concentration & Power AO

# FIG. 3

| Control rod bank name | Material | Function | Feature |
|---|---|---|---|
| CZ | Ag–In–Cd | Power axial offset control | Reducton in top diameter/replaceable role |
| CY | Ag–In–Cd | Reactivity control | Reducton in top diameter/replaceable role |
| CX | Ag–In–Cd | Reactivity control | Reducton in top diameter/replaceable role |
| C1 | $B_4C$ | Reactivity control | Apply same diameter to top and bottom absorbing material |
| AO | $B_4C$ | Power axial offset control | Apply same diameter to top and bottom absorbing material |
| SB | $B_4C$ | Reactor shutdown | Apply same diameter to top and bottom absorbing material |
| SA | $B_4C$ | Reactor shutdown | Apply same diameter to top and bottom absorbing material |

EP 4 167 251 B1

# FIG. 4

Cladding material (Inconel)

Air gap

Absorber material (Ag-In-Cd)

$r_1 = 0.35$ cm

$r_2 = 0.47$ cm

$h_{top} = 213.35$ cm

$h_{CR} = 426.7$ cm

$h_{bottom} = 209.97$ cm

$h_{end\ cap} = 3.38$ cm

# FIG. 5

AO

Independent | Total = 228 steps

CI

CX                                    0.5

CY                                    0.5

                                      0.5

CZ                                    0.5

Independent

                                      RC

Reactor

FIG. 6

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101668088 B1

- JP S58105088 A

**Non-patent literature cited in the description**

- Use of GPT for stabilization and acceleration of search mechanisms in industrial core computations. **VAN GEEMERT RENE**. ANNALS OF NUCLEAR ENERGY. PERGAMON PRESS, 19 September 2019, vol. 136

- Improvement of the axial power distribution control capabilities in VVER-1000 reactors. **YOUSEF-POUR**. ANNALS OF NUCLEAR ENERGY. PERGAMON PRESS, 01 July 2000, vol. 27, 949-957